# EUROPÄISCHE PATENTANMELDUNG

(11) **EP 4 475 079 A1**
(43) Veröffentlichungstag der Anmeldung: **11.12.2024**
(21) Anmeldenummer: 24180173.7
(22) Anmeldetag: 05.06.2024
(51) Int. Cl.: G06T 7/80, G01S 7/497

(54) **VERFAHREN ZUM KALIBRIEREN EINES ASSISTENZSYSTEMS EINES ZIVILEN KRAFTFAHRZEUGS**

(30) Priorität: 05.06.2023 DE 102023114676
(71) Anmelder: Spleenlab GmbH, 07929 Saalburg-Ebersdorf (DE)
(72) Erfinder: BORER IV, John J, 07929 Saalburg-Ebersdorf (DE); ÖLSNER, Florian, 07929 Saalburg-Ebersdorf (DE); TSCHIRNER, Jeremy, 07929 Saalburg-Ebersdorf (DE); MILZ, Stefan, 07929 Saalburg-Ebersdorf (DE)
(74) Vertreter: Bittner, Thomas L.

(57) **Zusammenfassung**

Es ist ein Verfahren zum Kalibrieren eines Assistenzsystems eines zivilen Kraftfahrzeugs geschaffen. Das Verfahren umfasst das Erfassen von Bilddaten für eine Umgebung eines zivilen Kraftfahrzeugs mittels einer Kameraeinrichtung in einem Bildsensor-Koordinatensystem; das Erfassen von erste Abstände zwischen dem zivilen Kraftfahrzeug und Objekten in der Umgebung anzeigenden Tiefendaten mittels einer Tiefensensoreinrichtung; das Ableiten von zweiten Abständen zwischen dem zivilen Kraftfahrzeug und in den Bilddaten dargestellten Objekten mittels einer auf künstlicher Intelligenz basierenden Bildanalyse in einer Datenverarbeitungseinrichtung, und Erstellen dreidimensionaler Bilddaten aus den Bilddaten und den zweiten Abständen in einem dreidimensionalen Bildsensor-Koordinatensystem; das Kalibrieren der Bilddaten und der Tiefendaten zueinander in der Datenverarbeitungseinrichtung, aufweisend das Bestimmen einer Transformationsregel; und das Anwenden der Transformationsregel auf nachfolgend erfasste Bilddaten und/oder Tiefendaten mittels der Datenverarbeitungseinrichtung. Weiterhin ist ein Ziviles Kraftfahrzeug bereitgestellt. (Fig. 2)

## Beschreibung

Die Erfindung betrifft ein Verfahren zum Kalibrieren eines Assistenzsystems eines zivilen Kraftfahrzeugs.

### Hintergrund

Zur Erhöhung der Sicherheit im Straßenverkehr verfügen zivile Kraftfahrzeuge zunehmend über Einrichtungen zur Messung und Analyse von Tiefendaten. Die Tiefendaten dienen insbesondere der Erkennung von Objekten in der Umgebung eines Kraftfahrzeugs und können in Fahrassistenzsysteme integriert werden, etwa im Rahmen einer Einparkhilfe, der Unterstützung von autonomem Fahren und der Unfallvermeidung. Die Tiefendaten werden mittels Tiefensensoren gemessen. Beispiele für gängige Tiefensensoren sind Lidar (Light detection and ranging) und Radar.

Neben Tiefendaten ist auch die Verwendung von Bilddaten in zivilen Kraftfahrzeugen bekannt. Bilddaten werden in Form einzelner Standbilder oder auch in Form fortlaufender Bildsequenzen (Video) erfasst. An einem Kraftfahrzeug können ein oder mehrere Kameras zur Aufnahme der Bilder verwendet werden. Die Bilddaten können verwendet werden, um den Sichtbereich des Fahrers zu ergänzen oder zu verbessern. Insbesondere ist bekannt, Tiefendaten mit Bilddaten zu kombinieren und dem Fahrer anzuzeigen. Beispielsweise können näherliegende Objekte in einer angezeigten Darstellung hervorgehoben werden, um den Fahrer auf Gefahrensituationen aufmerksam zu machen.

Um Bilddaten und Tiefendaten zu kombinieren, müssen diese kalibriert werden. Ein bekanntes Kalibrierverfahren umfasst Bereitstellen eines Objekts mit bekannten Abmessungen in einer bekannten Entfernung von einem Kraftfahrzeug. Das Objekt wird von den Tiefensensoren und Kameras des Kraftfahrzeugs aufgenommen. Anschließend wird eine Software zur Analyse der Bilddaten und der Tiefendaten so eingestellt, dass Merkmale des aufgenommenen Objekts, etwa Kanten und Ecken, in den Bilddaten und den Tiefendaten miteinander assoziiert werden können.

### Zusammenfassung

Aufgabe der Erfindung ist es, ein Verfahren zum Kalibrieren eines Assistenzsystems eines zivilen Kraftfahrzeugs bereitzustellen.

Zur Lösung wird ein Verfahren zum Kalibrieren eines Assistenzsystems eines zivilen Kraftfahrzeugs nach dem unabhängigen Anspruch 1 bereitgestellt. Weiterhin wird ein ziviles Kraftfahrzeug nach dem nebengeordneten Anspruch 15 bereitgestellt. Ausgestaltungen sind Gegenstand von abhängigen Unteransprüchen.

Nach einem Aspekt wird ein Verfahren zum Kalibrieren eines Assistenzsystems eines zivilen Kraftfahrzeugs bereitgestellt, welches Folgendes aufweist: Erfassen von Bilddaten für eine Umgebung eines zivilen Kraftfahrzeugs mittels einer Kameraeinrichtung, die an dem zivilen Kraftfahrzeug angeordnet ist, in einem Bildsensor-Koordinatensystem; Erfassen von Tiefendaten für die Umgebung eines zivilen Kraftfahrzeugs mittels einer Tiefensensoreinrichtung, die an dem zivilen Kraftfahrzeug angeordnet ist, wobei die Tiefendaten in einem Tiefensensor-Koordinatensystem erste Abstände zwischen dem zivilen Kraftfahrzeug und Objekten in der Umgebung des zivilen Kraftfahrzeugs anzeigen; Ableiten von zweiten Abständen zwischen dem zivilen Kraftfahrzeug und in den Bilddaten dargestellten Objekten in der Umgebung des zivilen Kraftfahrzeugs aus den Bilddaten mittels einer auf künstlicher Intelligenz basierenden Bildanalyse in einer Datenverarbeitungseinrichtung, und Erstellen dreidimensionaler Bilddaten aus den Bilddaten und den zweiten Abständen in einem dreidimensionalen Bildsensor-Koordinatensystem; Kalibrieren der Bilddaten und der Tiefendaten zueinander in der Datenverarbeitungseinrichtung, aufweisend Bestimmen einer Transformationsregel, mittels welcher die dreidimensionalen Bilddaten in das Tiefensensor-Koordinatensystem transformiert werden, so dass die Koordinaten der ersten und der zweiten Abstände in dem Tiefensensor-Koordinatensystem übereinstimmen; die Tiefendaten in das dreidimensionale Bildsensor-Koordinatensystem transformiert werden, so dass die Koordinaten der ersten und der zweiten Abstände in dem dreidimensionalen Bildsensor-Koordinatensystem übereinstimmen; oder die dreidimensionalen Bilddaten und die Tiefendaten in ein vorbestimmtes Koordinatensystem transformiert werden, so dass die Koordinaten der ersten und der zweiten Abstände in dem vorbestimmten Koordinatensystem übereinstimmen; und Anwenden der Transformationsregel auf nachfolgend erfasste Bilddaten und/oder Tiefendaten mittels der Datenverarbeitungseinrichtung.

Die Bilddaten liegen typischerweise in einem Rasterformat vor. Das Bildsensor-Koordinatensystem ist zweidimensional. Sein Ursprung kann beispielsweise in einer der Ecken des Rasters, in der Mitte des Rasters oder an einem vordefinierten beliebigen Punkt in dem Raster liegen. Die waagerechte Achse des Bildsensor-Koordinatensystems kann mit der waagerechten Ausrichtung der Kameraeinrichtung übereinstimmen, und die senkrechte Achse mit der senkrechten Ausrichtung.

Die Tiefendaten sind dreidimensional und liegen als Punktwolke oder und/oder als Sammlung von Vektordaten vor. Insbesondere können die Tiefendaten in Form von Linien vorliegen, wobei sämtliche Punkte auf einer Linie den gleichen Abstand zum Betrachter beziehungsweise zum Tiefensensor besitzen. Der Ursprung des Tiefensensor-Koordinatensystems kann mit dem Ort des Tiefensensors übereinstimmen. Die waagerechte und die senkrechte Achse kann mit der waagerechten und senkrechten Ausrichtung des Tiefensensors übereinstimmen, die dritte Achse mit dessen optischer Achse.

Beim Ableiten von Abständen zwischen dem zivilen Kraftfahrzeug und in den Bilddaten dargestellten Objekten werden aus zweidimensionalen Daten dreidimensionale Daten erzeugt. Die hierzu vorzugsweise verwendete künstliche Intelligenz ist beispielsweise ein neuronales Netzwerk, das mittels Trainingsdaten trainiert wurde, um für jeden Pixel in einem zweidimensionalen Raster einen bestimmten Abstand zum Ursprung des Bildsensor-Koordinatensystems zu ermitteln. Dies kann umfassen, Abstände (Entfernungen) von Objekten anhand von Stereoaufnahmen (bei Verwendung von zwei oder mehr Kameraeinrichtungen) oder anhand von Veränderungen in aufeinanderfolgenden Bildern einer Bildsequenz zu ermitteln, oder andere Maßnahmen zur Entfernungsbestimmung zu ergreifen oder mit den vorgenannten zu kombinieren. Die abgeleiteten Abstände können die gleichen Einheiten - beispielsweise Meter je Pixel - vorliegen wie die zweidimensionalen Daten. Alternativ können Sie in anderen Einheiten oder auch, verglichen mit den zweidimensionalen Daten, in vergrößerter oder verkleinerter Darstellung vorliegen; in beiden Fällen sind die Abstandswerte jedoch untereinander kongruent und geben die Entfernungsverhältnisse korrekt wieder. Es kann ein Umrechnungsfaktor festgesetzt oder ermittelt werden, mit dem die Abstandswerte mit den zweidimensionalen Daten in Kongruenz gebracht werden können.

Das eigentliche Kalibrieren der Bilddaten und der Tiefendaten zueinander dient dem Zweck, Punkte, Vektoren, Linien und/oder Objekte beider Daten einander zuzuordnen und somit eine Regel zu erstellen, die auf nachfolgend aufgenommene Daten - Bilddaten oder Tiefendaten - angewendet werden kann, um diese aufeinander abzubilden, beispielsweise um sie übereinanderzulegen und dem Fahrer anzuzeigen. Insofern ist im Sinne der vorliegenden Offenbarung unter einem Übereinstimmen der Koordinaten von Abständen zu verstehen, dass einander entsprechende und hierdurch einander zugeordnete Koordinatenpunkte übereinstimmen, an welchen die jeweiligen Abstände enden.

Das Kalibrieren umfasst in einer Ausführungsform zunächst das Bestimmen übereinstimmender charakteristischer Objektabschnitte aus den ermittelten Abständen der Bilddaten und den Tiefendaten. Ein Objektabschnitt umfasst beispielsweise dreidimensionale Koordinaten von Ecken oder Kanten von Objekten oder auch einzelne saliente Punkte oder vollständige Objekte. Ein charakteristischer Objektabschnitt ist derjenige Teil eines Objekts, der in den Bilddaten und/oder Tiefendaten besonders repräsentativ für das Objekt ist und ausreichen kann, um die Form des Objekts zumindest teilweise zu definieren. Beispiele für charakteristische Objektabschnitte umfassen die Ecken eines Würfels, Quaders oder anderen geometrischen Körpers, der von ebenen Flächen begrenzt wird; in diesen Beispielen sind die Ecken charakteristischer als die Kanten und als einzelne Punkte oder Teile der Körperflächen. Für Kugeln oder allgemeine Rotationskörper oder beliebige organische Formen können charakteristische Objektabschnitte durch deren Umrisse oder durch Teile derselben gegeben sein. Übereinstimmende charakteristische Objektabschnitte sind charakteristische Objektabschnitte beider Datenmengen, die sich innerhalb eines vorgegebenen Toleranzwerts aufeinander abbilden lassen und somit mit einer hohen Wahrscheinlichkeit das gleiche Objekt oder den gleichen Teil eines Objekts darstellen.

Die Transformationsregel kann durch eine von wenigstens drei Ausführungsformen bestimmt werden. In einer ersten Ausführungsform werden die dreidimensionalen Bilddaten dergestalt transformiert, dass die zweiten Abstände aus den dreidimensionalen Bilddaten mit den Abständen aus den Tiefendaten übereinstimmen. Somit wird die Transformationsregel zunächst im dreidimensionalen Raum anhand der Abstände beider Daten bestimmt, dann in den zweidimensionalen Raum projiziert und anschließend auf weitere Bilddaten angewendet. Die hierbei angewendeten Transformationen können Translation, Rotation, Scherung, Skalierung etc. umfassen. Die Bilddaten werden bei Anwendung der Transformationsregel in Tiefensensor-Koordinatensystem transformiert, nachdem dieses auf zwei Dimensionen projiziert wurde. In Ausführungsformen, die die oben erläuterte Bestimmung charakteristischer Objektabschnitte umfassen, wird die Transformationsregel anstelle der Abstände der Bilddaten anhand der charakteristischen Objektabschnitte bestimmt, wobei die charakteristischen Objektabschnitte mit entsprechenden Koordinaten der Tiefensensordaten in Einklang gebracht werden.

In einer zweiten Ausführungsform werden die dreidimensionalen Tiefendaten dergestalt transformiert, dass die Abstände der dreidimensionalen Bilddaten mit den Abständen der Tiefendaten übereinstimmen. Die Tiefendaten werden hierbei auf das dreidimensionale Bilddaten-Koordinatensystem abgebildet. In Ausführungsformen mit charakteristischen Objektabschnitten werden anstelle der Abstände die ermittelten Objektabschnitte zur Übereinstimmung mit entsprechenden Koordinaten der Tiefendaten gebracht.

In einer dritten Ausführungsform werden die dreidimensionalen Bilddaten und die Tiefendaten in ein vorbestimmtes -Koordinatensystem transformiert, wobei die Koordinaten der Abstände des Bildsensor- und des Tiefensensor-Koordinatensystems, alternativ in einer Ausführungsform die charakteristischen Objektabschnitte beider Koordinatensysteme, in dem vorbestimmten Koordinatensystem übereinstimmen. Das vorbestimmte Koordinatensystem ist in einer Ausführungsform ebenfalls dreidimensional; in einer Ausführungsform ist das vorbestimmte Koordinatensystem zweidimensional, und die Transformationsregel bildet von den beiden dreidimensionalen Koordinatensystemen auf den zweidimensionalen Raum ab, etwa per Projektion. Das vorbestimmte Koordinatensystem kann durch einen Anwender vorgeben sein, beispielsweise durch Auswahl eines Bildausschnitts in (den) angezeigten Bilddaten. Alternativ kann das vorbestimmte Koordinatensystem automatisch als Mittelung des dreidimensionalen Bildsensor-Koordinatensystems und des Tiefensensor-Koordinatensystems erstellt werden, etwa indem das Zentrum einer Überlappung beider Systeme als Ursprung des vorbestimmten Koordinatensystems bestimmt wird.

Das Bestimmen der Transformationsregel im dreidimensionalen Raum kann in einer Ausführungsform umfassen, Punkte aus den Tiefendaten in das zweidimensionalen Bildsensor-Koordinatensystem zu projizieren und einem Punkt oder Objekt der Bilddaten zuzuordnen, um Korrespondenzen der Daten beider Datenmengen zu ermitteln. Das Zuordnen kann anhand bestimmter Ähnlichkeiten der Punkte/Objekte beider Datenmengen erfolgen, beispielsweise ähnliche Helligkeitswerte, ähnliche Helligkeitswerte in den Nachbarschaften, ähnliche Farbwerte, ähnliche Farbwerte in den Nachbarschaften. Das Zuordnen kann iterativ für jeden Punkt der Tiefendaten durchgeführt werden. Die Iterationen können auch unabhängig voneinander und somit parallel durchgeführt werden, um die Zuordnung zu beschleunigen.

Die derart ermittelte Transformationsregel ist vorzugsweise eine Matrix (Transformationsmatrix). Die Matrix kann ihrerseits das Produkt aus mehreren Matrizen sein, die jeweils eine Transformation definieren, beispielsweise Rotation, Skalierung, Scherung. Die Matrix kann je nach Anwendungsfall zweidimensionale oder dreidimensionale Transformationen vornehmen. Im dreidimensionalen Fall kann die Matrix um Parameter/Koeffizienten für die dritte Dimension erweitert werden; einschlägige Formate für Transformationsmatrizen zur Transformation in drei Dimensionen sind dem Fachmann bekannt.

Ist die Transformationsmatrix bekannt, kann sie auf nachfolgend erfasste Bilddaten und/oder Tiefendaten angewendet werden, um weitere Analysen beider Daten vorzunehmen oder die Daten in kombinierter Form anzuzeigen. In einem Beispiel können die Daten übereinandergelegt angezeigt werden, um dem Betrachter einen Eindruck von der Entfernung bestimmter Objekte zu geben. Alternativ können Objekte in den Bilddaten anhand ihrer geringeren oder größeren Entfernung hervorgehoben beziehungsweise abgeschwächt werden, um die Aufmerksamkeit des Betrachters auf die näheren Objekte zu lenken und den Betrachter von den weiter entfernten Objekten nicht abzulenken. Hierzu können unterschiedliche Intensitäten oder Farben verwendet werden: Beispielsweise kann für nähere Objekte eine stärkere Intensität und/oder Farbe verwendet werden als für weiter entfernte Objekte, oder umgekehrt.

Das Kalibrieren der Bilddaten und der Tiefendaten zueinander kann fortlaufend in Echtzeit erfolgen. Alternativ kann das Kalibrieren in regelmäßigen Abständen oder zu vordefinierten Zeitpunkten erfolgen. In einer Ausführungsform kann das Kalibrieren durchgeführt werden, wenn sich die Lichtverhältnisse wesentlich ändern. Beispielsweise kann das Verfahren umfassend, fortlaufend eine Helligkeit der Umgebung zu messen, und kann die Kalibrierung wiederholen, wenn die Helligkeit unter einen vorgegebenen Schwellwert fällt oder über den (oder einen anderen) Schwellwert steigt. In einer Ausführungsform können mehrere Transformationsregeln bei verschiedenen Lichtverhältnissen ermittelt werden; je nach Helligkeit wird die jeweilige Transformationsregel auf die Bilddaten und/oder Tiefendaten angewendet.

Das Verfahren kann ein Fusionieren der mittels Anwendens der Transformationsregel transformierten Bilddaten und/oder der mittels Anwenden der Transformationsregel transformierten Tiefendaten miteinander bzw. mit den verbleibenden nicht von der Transformationsregel erfassten Bilddaten oder Tiefendaten umfassen, wobei Bildpixel und Abstände mit übereinstimmenden Koordinaten einander zugeordnet werden. Fusionieren der Daten kann ein Übereinanderlegen, etwa im Wege der Addition oder Subtraktion von Intensitäts- oder Farbwerten, umfassen. Alternativ können einzelne Objekte in den Bilddaten anhand ihrer Entfernung gemäß der Tiefendaten hervorgehoben oder abgeschwächt werden, wie bereits erläutert wurde.

Insbesondere werden die fusionierten Daten in einem Fahrassistenzsystem des zivilen Kraftfahrzeugs verwendet. Dies kann die Anzeige der Daten umfassen oder auch die Bestimmung von Objekten, die innerhalb einer vorbestimmten Mindestentfernung liegen. In einer Ausführungsform kann eine Warnung angezeigt werden, falls ein Objekt in zu großer Nähe des Kraftfahrzeugs erkannt wird. Diese Warnung kann eine Anzeige und einen Hinweis auf das betreffende Objekt erfassen.

In bestimmten Ausführungsformen werden charakteristische Objektabschnitte bestimmt. Das Bestimmen übereinstimmender charakteristischer Objektabschnitte in Bild- und Tiefendaten kann eine Optimierung der Bilddaten mittels eines Bildoptimierungsalgorithmus umfassen. Die Optimierung kann die Anwendung bestimmter Filteroperationen umfassen, beispielsweise die Anwendung von Kantendetektoren, Kontrastfiltern, Filtern zur Unterdrückung von Bildrauschen. Derart gefilterte Daten können ferner auf zusammenhängende Pixel untersucht werden, beispielsweise im Wege einer Segmentation und/oder einer Analyse auf lokale oder globale Maxima/Minima. Analog können Bild- und/oder Tiefendaten auch ohne Verwendung charakteristischer Objektabschnitte den genannten Filteroperationen unterzogen werden.

Das Erstellen dreidimensionaler Bilddaten aus zweidimensionalen Bilddaten und ermittelten Abständen zwischen dem zivilen Kraftfahrzeug und in den Bilddaten dargestellten Objekten in der Umgebung des zivilen Kraftfahrzeugs aus den Bilddaten kann kann umfassen, den bereits vorliegenden zweidimensionalen Bilddaten als dritte Information den jeweilige Abstand von dem zivilen Kraftfahrzeug als dritte Dimension hinzuzufügen. Es ergibt sich eine dreidimensionale Punktwolke, wobei jeder der Punkte mit der Intensität und/oder Farbe des entsprechenden Bildpunktes assoziiert ist.

Das Anwenden der Transformationsregel auf nachfolgend erfasste Bilddaten kann umfassen, eine zweidimensionale Projektion der Transformationsregel anzuwenden. Ferner kann das Anwenden der Transformationsregel auf Tiefendaten umfassen, die Tiefendaten vor oder nach dem Anwenden der Transformationsregel einer zweidimensionalen Projektion zu unterziehen.

Das Verfahren kann während einer Fahrbewegung des zivilen Kraftfahrzeugs ausgeführt werden. Insbesondere kann das Verfahren frei von einer Verwendung eines Kalibrierungsnormals erfolgen. Bei einem solchen Kalibrierungsnormal würde man anhand eines Objekts mit vorbekannten Abmessungen und vorbekanntem Abstand von dem zivilen Kraftfahrzeug kalibrieren. Die Notwendigkeit der Bereitstellung eines solchen Objekts erübrigt sich durch die Erfindung, da diese in den Bilddaten und den Tiefendaten ermittelte beziehungsweise gemessene Abstände, in einigen Ausführungsformen alternativ charakteristische Objektabschnitte, bestimmt und diese automatisch aufeinander abbildet, wie oben erläutert wurde. Es können somit beliebige Umgebungen und beliebige Objekte mit beliebigen Abmessungen und Entfernungen verwendet werden. Zudem kann das Kalibrierungsverfahren jederzeit wiederholt werden, ohne eine vorbestimmte Umgebung einrichten oder aufsuchen zu müssen.

Die Tiefendaten können mittels mindestens einer Tiefensensoreinrichtung, die an dem zivilen Kraftfahrzeug angeordnet ist, aus der folgenden Gruppe erfasst werden: Lidar-Messeinrichtung, Time-of-Flight-Messeinrichtung und Radar-Messeinrichtung. Insbesondere können die Bilddaten mittels mindestens einer Kameraeinrichtung, die an dem zivilen Kraftfahrzeug angeordnet ist, aus der folgenden Gruppe erfasst werden: Videobild-Kameraeinrichtung, Thermobild-Kameraeinrichtung und Infrarot-Kameraeinrichtung.

Bei dem Ableiten von Abständen zwischen dem zivilen Kraftfahrzeug und in den Bilddaten dargestellten Objekten in der Umgebung des zivilen Kraftfahrzeugs aus den Bilddaten kann die Bildanalyse auf einer künstlichen Intelligenz in Form eines neuronalen Netzes basieren, insbesondere einem Monodepth-Netzwerk.

Weitere Bilddaten für die Umgebung des zivilen Kraftfahrzeugs können mittels einer weiteren Kameraeinrichtung, die an dem zivilen Kraftfahrzeug angeordnet ist, in einem weiteren Bildsensor-Koordinatensystem erfasst werden. Bei der Verwendung von Bilddaten mehrerer Kameraeinrichtungen können die Kalibrierungsschritte wie folgt durchgeführt werden. Zunächst werden Bilddaten der weiteren Kameraeinrichtung als zweite Bilddaten erfasst. An diesen Bilddaten werden die Schritte zum Ableiten von Abständen zwischen dem zivilen Kraftfahrzeug und in den zweiten Bilddaten dargestellten Objekten analog zu dem oben beschriebenen Ableiten durchgeführt. In einer ersten Ausführungsform werden die zweiten Bilddaten anschließend mit den Bilddaten der ersten Kameraeinrichtung kalibriert, indem übereinstimmende Abstände, in einer Ausführungsform alternativ oder zusätzlich charakteristische Objektabschnitte, ermittelt und eine Transformationsregel bestimmt wird; anstelle der zuvor beschriebenen Schritte, die anhand der ersten Bilddaten und der Tiefendaten durchgeführt werden, verwendet die Kalibrierung nun die ersten und die zweiten Bilddaten analog. In einer zweiten Ausführungsform werden die zweiten Bilddaten stattdessen mit den Tiefendaten kalibriert; anstelle der zuvor beschriebenen Schritte verwendet die Kalibrierung nun die zweiten Bilddaten und die Tiefendaten analog. In einer dritten Ausführungsform werden die zweiten Bilddaten nacheinander mit den ersten Bilddaten und den Tiefendaten kalibriert. In jeder dieser Ausführungsformen wird somit wenigstens eine Transformationsregel bestimmt, die auf nachfolgend erfasste (erste und zweite) Bilddaten und/oder Tiefendaten angewendet werden kann. Mit derartigen Transformationsregeln können also nicht nur Bild- mit Tiefendaten kalibriert werden, sondern auch Bilddaten aus mehr als einer Quelle, und diese wiederum mit Tiefendaten.

Weitere Tiefendaten für die Umgebung eines zivilen Kraftfahrzeugs können mittels einer weiteren Tiefensensoreinrichtung, die an dem zivilen Kraftfahrzeug angeordnet ist, erfasst werden, wobei die weiteren Tiefendaten in einem weiteren Tiefensensor-Koordinatensystem Abstände zwischen dem zivilen Kraftfahrzeug und Objekten in der Umgebung des zivilen Kraftfahrzeugs anzeigen. Analog zu dem vorstehend beschriebenen Beispiel mit mehreren (ersten und zweiten) Bilddaten kann die Kalibrierung somit anhand der Bild- und Tiefendaten sowie der weiteren Tiefendaten durchgeführt werden. Auch hier können mehrere Transformationsregeln ermittelt werden, etwa zwischen Tiefendaten und weiteren Tiefendaten, zwischen Bilddaten und weiteren Tiefendaten und einer Kombination von allen drei Daten.

Ein weiterer Aspekt der hier offenbarten Erfindung betrifft außerdem ein ziviles Kraftfahrzeug mit einer Kameraeinrichtung; einer Tiefensensoreinrichtung; und einer Datenverarbeitungseinrichtung, wobei das zivile Kraftfahrzeug eingerichtet ist, eines oder mehrere der hier beschriebenen Verfahren auszuführen.

Die vorangehend im Zusammenhang mit dem Verfahren zum Kalibrieren eines Assistenzsystems eines zivilen Kraftfahrzeugs ausgeführten Ausgestaltungen können für das zivile Kraftfahrzeug entsprechend vorgesehen sein und umgekehrt.

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine schematische Darstellung für ein bekanntes Verfahren zum Kalibrieren von Daten;
- Fig. 2: eine schematische Darstellung für ein erfindungsgemäßes Verfahren zum Kalibrieren von Daten;
- Fig. 3A: ein Beispiel für Bilddaten;
- Fig. 3B: ein Beispiel für Tiefendaten;
- Fig. 3C: ein Beispiel für fusionierte Bild- und Tiefendaten;
- Fig. 4: eine schematische Darstellung der Bestimmung einer Transformationsregel.

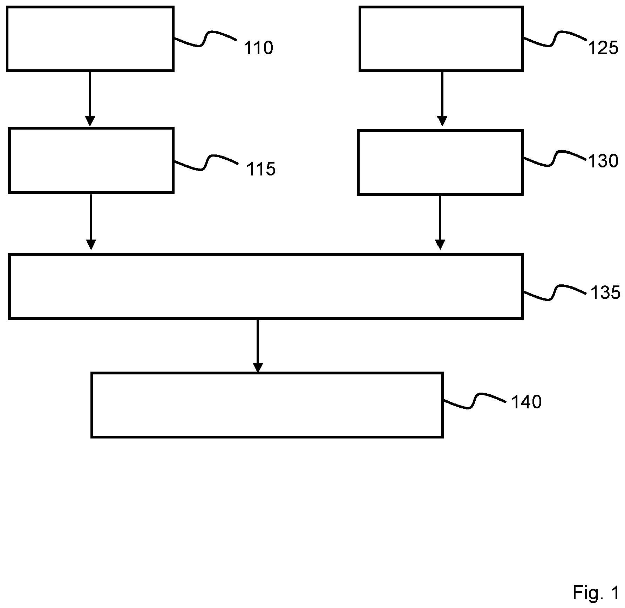

Fig. 1 zeigt eine schematische Darstellung für ein bekanntes Verfahren zum Kalibrieren eines Assistenzsystems eines zivilen Kraftfahrzeugs. In einem Schritt 110 werden mittels einer Kameraeinrichtung, die an dem zivilen Kraftfahrzeug befestigt ist, Bilddaten ermittelt. Diese Bilddaten werden in Schritt 115 einer Helligkeits-/Intensitätsanalyse unterzogen, um bestimmte Bildmerkmale zu bestimmen. Diese Bildmerkmale sind beispielsweise Kanten oder Ecken von abgebildeten Objekten.

Schritt 125 betrifft die Erfassung dreidimensionaler Entfernungsdaten, beispielsweise mittels einer Lidar-Kameraeinrichtung. Die Entfernungsdaten liegen beispielsweise in Form einer Punktwolke vor und werden in Schritt 130 ebenfalls einer Helligkeits-/Intensitätsanalyse unterzogen. Dies umfasst üblicherweise zunächst eine Reduktion der Entfernungsdaten auf zweidimensionale Bilddaten; in diesen zweidimensionalen Bilddaten werden dann, analog zu Schritt 115, Merkmale detektiert.

In Schritt 135 werden aus den jeweils detektierten Merkmalen diejenigen ermittelt, die in beiden Datenmengen enthalten sind und die somit einander zugeordnet werden können. Aus diesen Zuordnungen wird in Schritt 140 eine Funktion ermittelt, mit der die Bilddaten auf die zweidimensional reduzierten Entfernungsdaten abgebildet werden können. In der Folge kann diese Funktion verwendet werden, um nachfolgende Bilddaten zu transformieren. Das Ergebnis einer solchen Transformation kann mit den Entfernungsdaten kombiniert werden, um die Entfernungen von Objekten, die in den Bilddaten enthalten sind, anzuzeigen und/oder hervorzuheben.

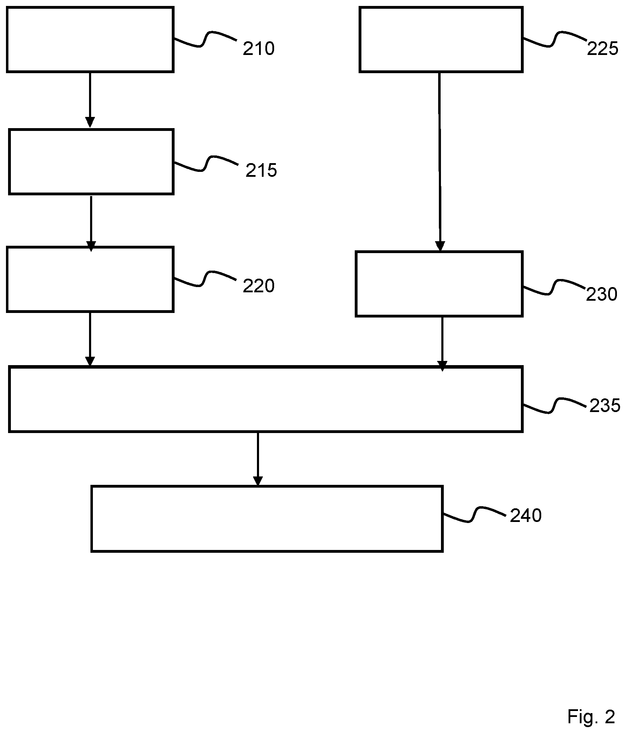

Fig. 2 zeigt eine schematische Darstellung für ein erfindungsgemäßes Verfahren zum Kalibrieren eines Assistenzsystems eines zivilen Kraftfahrzeugs. In Schritt 210 erfasst das Verfahren mittels einer an dem zivilen Kraftfahrzeug befestigten Kameraeinrichtung zweidimensionale Bilddaten. Aus diesen Bilddaten werden in Schritt 215 Abstände zwischen dem zivilen Kraftfahrzeug und in den Bilddaten dargestellten Objekten abgeleitet und auf diese Weise dreidimensionale Daten erzeugt. Das Ableiten erfolgt vorzugsweise mittels einer auf künstlicher Intelligenz basierenden Bildanalyse, insbesondere unter Verwendung eines neuronalen Netzes, das aus bestimmten Bildmerkmalen Aussagen über Entfernungen der jeweiligen Objekte oder Pixel derselben trifft. Das Ableiten wird durch eine Datenverarbeitungseinrichtung durchgeführt, die beispielsweise ein Bestandteil der Bordelektronik des zivilen Kraftfahrzeugs ist oder auf einem entfernten Server untergebracht ist und die Bilddaten zur Verarbeitung über Funk erhält. Als Ergebnis des Schrittes 210 liegen dreidimensionale Bilddaten vor, deren dritte Dimension durch die ermittelten Abstände gegeben ist.

In Schritt 220 werden in einer Ausführungsform aus den abgeleiteten Abständen und optional auch aus den zugrundeliegenden Bilddaten charakteristische Objektabschnitte bestimmt. Schritt 220 ist für das Verfahren 200 in einer Ausführungsform nicht unbedingt erforderlich. Die charakteristischen Objektabschnitte sind Teile detektierter Objekte oder auch vollständige Objekte. Die charakteristischen Objektabschnitte umfassen insbesondere Ecken, Kanten und/oder Begrenzungslinien von Objekten. Insbesondere umfassen die charakteristischen Objektabschnitte jeweils mehrere Koordinaten, die zu demselben Objekt gehören. Dieses Bestimmen kann etwa durch dreidimensionale Kantendetektoren, Connected-Component-Analyse oder andere Verfahren, insbesondere auch neuronale Netze, durchgeführt werden.

In Schritt 225 werden Tiefendaten für die Umgebung des zivilen Kraftfahrzeugs erfasst. Hierzu wird vorzugsweise ein Laserscanner mit Lidarfunktion oder ein Radargerät verwendet. Jede Vorrichtung zur Messung von Entfernungsmessern ist grundsätzlich zum Erfassen der Tiefendaten geeignet. Die Tiefendaten liegen in drei Dimensionen vor.

Analog zu Schritt 220 werden in einer Ausführungsform auch die Tiefendaten einer Analyse auf charakteristische Objektabschnitte hin untersucht. Wie bereits erläutert, umfasst dies die Ermittlung von Gruppen von Koordinaten, die zu demselben Objekt gehören.

In Schritt 235 werden aus den Koordinaten der Abstände in den dreidimensionalen Bilddaten und in den Tiefendaten die einander entsprechenden Abstände beider Datenmengen ermittelt. Dies kann im Wege einer Korrelation beider Datenmengen erfolgen. Zusätzlich oder alternativ kann eine statistische Analyse und/oder Optimierung durchgeführt werden. In einer Ausführungsform werden die Entsprechungen dieser Koordinaten in beiden Datenmengen mittels Transinformation und/oder Synentropie ermittelt und maximiert. In einer Ausführungsform können statt der Abstandskoordinaten als charakteristische Objektabschnitten aus aus den Bilddaten abgeleiteten Abständen und den Tiefendaten diejenigen Objektabschnitte bestimmt werden, die in beiden Datenmengen übereinstimmen. Beispielsweise kann durch Korrelationsverfahren ermittelt werden, welche der zusammenhängenden Koordinaten in der einen Datenmenge mit zusammenhängenden Koordinaten der anderen Datenmenge übereinstimmen oder diesen entsprechen. Liegt die Übereinstimmung über einem vorbestimmten Schwellwert, werden die Koordinaten beider Datenmengen als einander entsprechend markiert oder anderweitig gemeinsam gespeichert.

Schritt 240 betrifft das Bestimmen einer Transformationsregel, die die Bilddaten und Tiefendaten aufeinander abbildet. Die Transformationsregel umfasst in einem Beispiel eine oder mehrere Transformationsmatrizen, die die Bildkoordinaten und/oder Tiefenkoordinaten in ein anderes Koordinatensystem überführen. Zusätzlich oder alternativ zu Transformationsmatrizen können auch nicht-lineare Transformationen vorgenommen werden. In einem Beispiel werden die Bilddaten aus dem dreidimensionalen Bildsensor-Koordinatensystem in das Tiefensensor-Koordinatensystem transformiert. Diese Transformation erfolgt unter der Maßgabe, dass die dreidimensionalen Koordinaten der Abstände in dem dreidimensionalen Bildsensor-Koordinatensystem nach der Transformation mit Abstandskoordinaten in dem dreidimensionalen Tiefensensor-Koordinatensystem übereinstimmen. Die so erhaltene dreidimensionale Transformationsregel kann zu einer zweidimensionalen Transformationsregel reduziert werden, die anschließend auf zweidimensionale Bilddaten angewendet werden kann. Beispielsweise kann die dreidimensionale Transformationsregel durch eine oder mehrere Matrizen dargestellt werden, die durch Weglassen von Matrizenkoeffizienten in eine zweidimensionale Transformationsregel überführt werden. Analoge Operationen sind auch mit nichtlinearen Transformationsregeln möglich. Diese zweidimensionale Transformationsregel kann nun auf die zweidimensionalen Bilddaten angewendet werden, um diese in das Tiefensensor-Koordinatensystem zu transformieren. In einer Ausführungsform können die Bilddaten in eine zweidimensionale Projektion des Tiefensensor-Koordinatensystems transformiert werden.

In einem weiteren Beispiel umfasst Schritt 240 Transformieren der Tiefendaten in das dreidimensionale Bildsensor-Koordinatensystem, so dass die Koordinaten der Abstände beider Koordinatensysteme übereinstimmen. Auch in diesem Beispiel ist die Transformationsregel zunächst dreidimensional. Sie kann in dieser Form auf nachfolgende Tiefendaten angewendet werden, um diese mit nachfolgenden (zweidimensionalen) Bilddaten in Einklang zu bringen. Dies kann umfassen, die nachfolgenden Tiefendaten zunächst dreidimensional zu transformieren und anschließend auf die zwei Dimensionen der Bilddaten zu projizieren, oder aber eine zweidimensionale Projektion der Transformationsregel auf zweidimensional projizierte Tiefendaten anzuwenden.

In einem weiteren Beispiel umfasst Schritt 240 Transformieren der dreidimensionalen Bilddaten und der Tiefendaten in ein vorbestimmtes Koordinatensystem, so dass die Koordinaten der Abstände der Bildsensor- und Tiefensensor-Koordinatensysteme in dem vorbestimmten Koordinatensystem übereinstimmen. Das vorbestimmte Koordinatensystem ist in einer Ausführungsform ebenfalls dreidimensional, und auch die ermittelte Transformationsregel bildet von drei Dimensionen auf drei Dimensionen ab. Alternativ kann das vorbestimmte Koordinatensystem zweidimensional sein, wobei die Transformationsregel von drei auf zwei Dimensionen abbildet.

Im Anschluss an Schritt 240 kann die ermittelte Transformationsregel auf nachfolgend aufgenommene Bilddaten und/oder Tiefendaten angewendet werden.

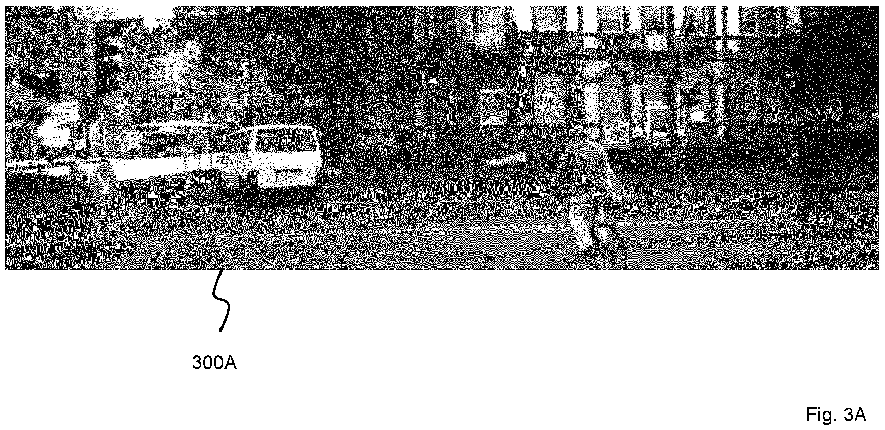

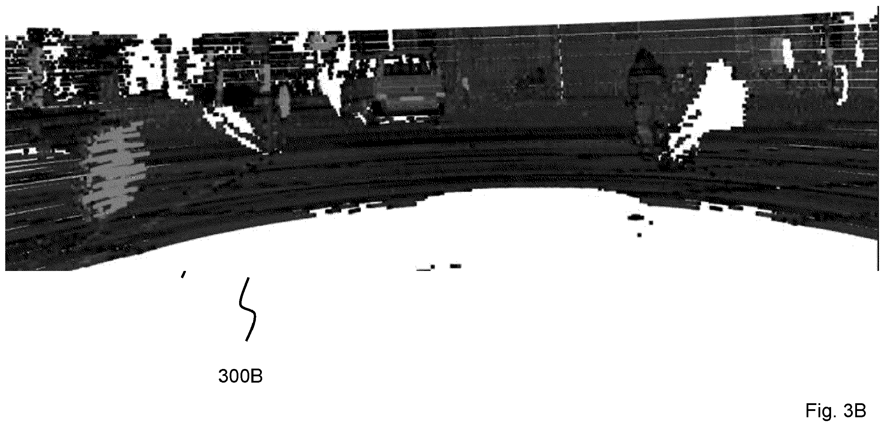

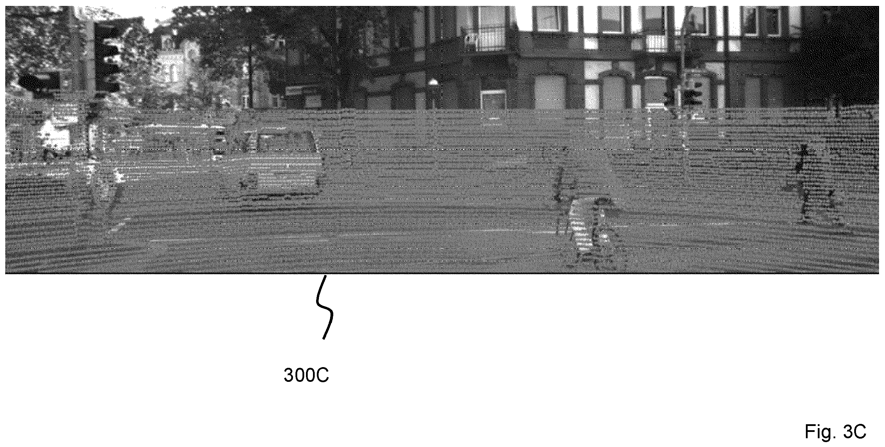

Die Figuren 3A, 3B und 3C zeigen beispielhafte Bild- und Tiefendaten. Bild 3A zeigt Bilddaten 300A, hier als Graustufenbild dargestellt. Jedes Pixel umfasst einen Helligkeitswert. Die Bilddaten können auch farbig dargestellt sein, beispielsweise als RGB-Bild. Figur 3B zeigt Tiefendaten 300B. Jedes Pixel umfasst einen Helligkeitswert, der eine Entfernung einer jeweiligen Stelle in der Umgebung eines zivilen Kraftfahrzeugs von der Aufnahmeeinrichtung definiert. Beispielsweise kann ein hellerer Wert eine größere Nähe darstellen, oder umgekehrt. Die Tiefendaten 300B sind hier als Graustufenbild gezeigt, können jedoch auch farbige Daten umfassen, beispielsweise in RGB-Kodierung. Durch Farbwerte können ebenfalls Entfernungen dargestellt werden. Alternativ können die Farbwerte weitere Informationen kodieren, beispielsweise eine Veränderung gegenüber zuvor aufgenommenen Tiefendaten.

In den Bilddaten 300A und Tiefendaten 300B sind Objekte zu erkennen, beispielsweise eine Häuserfassade, ein Kraftfahrzeug, ein Fahrradfahrer und ein Fußgänger. Ferner zeigen die Bild- und Tiefendaten unterschiedliche Ausschnitte der Umgebung der verwendeten Aufnahmeeinrichtungen, da die Kameraeinrichtung und der Tiefensensor unterschiedlich ausgerichtet und/oder an unterschiedlichen Orten angebracht sind.

Die gezeigten Bild- und Tiefendaten können der vorstehend beschriebenen Analyse unterzogen werden, wobei aus den Bilddaten Abstände zwischen der Kameraeinrichtung und den dargestellten Objekten abgeleitet werden und den Bilddaten als dritte Dimension hinzugefügt werden. In einer Ausführungsform können sowohl in den dreidimensionalen Bilddaten als auch in den Tiefendaten charakteristische Objektabschnitte ermittelt werden. Im Anschluss können diejenigen charakteristischen Objektabschnitte ermittelt werden, die in beiden Koordinatensystemen übereinstimmen. Aus diesen übereinstimmenden charakteristischen Objektabschnitten kann eine Transformationsregel bestimmt werden, die in der Folge auf die Bilddaten und/oder die Tiefendaten angewendet wird, so dass diese in ein jeweiliges modifiziertes Koordinatensystem überführt werden. Unabhängig davon, ob sämtliche Abstandsdaten oder lediglich charakteristische Objektabschnitte betrachtet werden, können die resultierenden Daten in einem Beispiel übereinandergelegt/fusioniert werden. Eine solche Übereinanderlegung ist in Figur 3C als Bild 300C gezeigt. Das Bild 300C zeigt sowohl die Helligkeitswerte der Bilddaten 300A als auch die Helligkeitswerte der Tiefendaten 300B; letztere sind als fortlaufende Linien erkennbar, die durch ihre Farben und/oder Helligkeitswerte bestimmte Entfernungen von dem Tiefensensor anzeigen. Wie aus Bild 300C ersichtlich, wurden die Unterschiede in Ausrichtung und Aufstellungsort der Aufnahmeeinrichtungen mittels der Transformationsregel behoben, so dass die Bild- und Tiefendaten korrekt übereinandergelegt werden konnten.

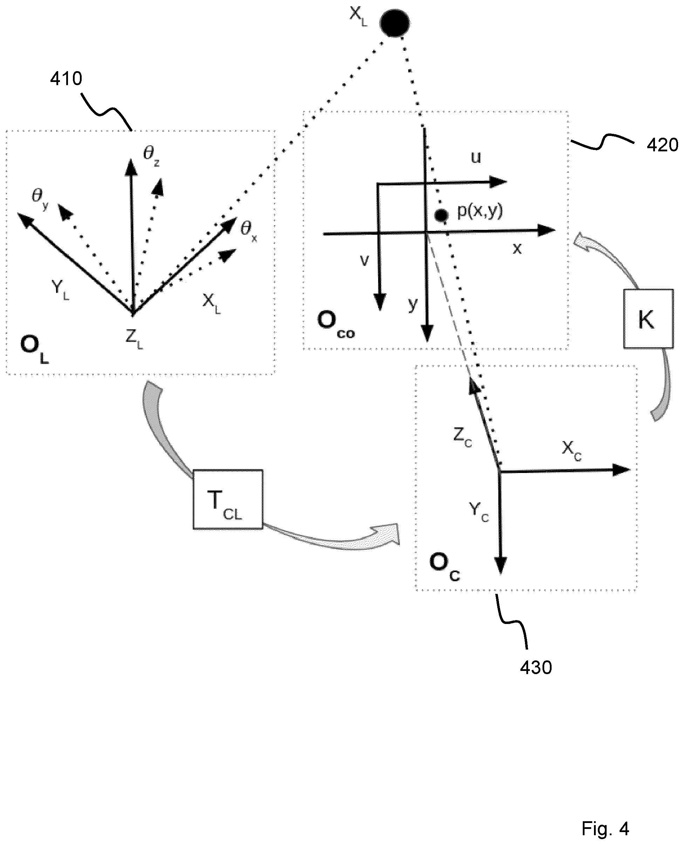

Fig. 4 zeigt beispielhaft einige Koordinatensysteme, die in den hier beschriebenen Beispielen Verwendung finden. Figur 4 zeigt einen Punkt X_{L} in der Umgebung einer Kameraeinrichtung und eines Tiefensensors beziehungsweise eines zivilen Kraftfahrzeugs, an dem diese befestigt sind. Figur 4 zeigt ferner ein dreidimensionales Tiefensensor-Koordinatensystem 410 sowie ein zweidimensionales Bildsensor-Koordinatensystem 420. Aus Bilddaten, die in dem Koordinatensystem 420 enthalten sein können, werden Abstände abgeleitet und somit dreidimensionale Daten erzeugt. Diese werden durch das dreidimensionale Koordinatensystem 430 angedeutet. Aus Bilddaten und Abständen einerseits und Tiefendaten andererseits können in einer Ausführungsform jeweilige charakteristische Objektabschnitte ermittelt werden. Ferner können diejenigen charakteristischen Objektabschnitte ermittelt werden, die in den Koordinatensystemen 410 und 430 übereinstimmen. Um die Abstandskoordinaten beziehungsweise die charakteristischen Objektabschnitte beider Koordinatensysteme aufeinander abzubilden, kann eine Transformationsregel T_{CL} ermittelt werden. Diese kann in der Folge beispielsweise auf zwei Dimensionen reduziert und wiederum auf das Bildsensor-Koordinatensystem 420 angewendet werden. Das so entstehende modifizierte Bildsensor-Koordinatensystem ist durch eine Verschiebung der x- und y-Achsen des Koordinatensystems zu u- und v-Achsen angedeutet.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Kalibrieren eines Assistenzsystems eines zivilen Kraftfahrzeugs, mit
- Erfassen von Bilddaten für eine Umgebung eines zivilen Kraftfahrzeugs mittels einer Kameraeinrichtung, die an dem zivilen Kraftfahrzeug angeordnet ist, in einem Bildsensor-Koordinatensystem;
- Erfassen von Tiefendaten für die Umgebung eines zivilen Kraftfahrzeugs mittels einer Tiefensensoreinrichtung, die an dem zivilen Kraftfahrzeug angeordnet ist, wobei die Tiefendaten in einem Tiefensensor-Koordinatensystem erste Abstände zwischen dem zivilen Kraftfahrzeug und Objekten in der Umgebung des zivilen Kraftfahrzeugs anzeigen;
- Ableiten von zweiten Abständen zwischen dem zivilen Kraftfahrzeug und in den Bilddaten dargestellten Objekten in der Umgebung des zivilen Kraftfahrzeugs aus den Bilddaten mittels einer auf künstlicher Intelligenz basierenden Bildanalyse in einer Datenverarbeitungseinrichtung, und Erstellen dreidimensionaler Bilddaten aus den Bilddaten und den zweiten Abständen in einem dreidimensionalen Bildsensor-Koordinatensystem;
- Kalibrieren der Bilddaten und der Tiefendaten zueinander in der Datenverarbeitungseinrichtung, aufweisend
Bestimmen einer Transformationsregel, mittels welcher
- die dreidimensionalen Bilddaten in das Tiefensensor-Koordinatensystem transformiert werden, so dass die Koordinaten der ersten und der zweiten Abstände in dem Tiefensensor-Koordinatensystem übereinstimmen;
- die Tiefendaten in das dreidimensionale Bildsensor-Koordinatensystem transformiert werden, so dass die Koordinaten der ersten und der zweiten Abstände in dem dreidimensionalen Bildsensor-Koordinatensystem übereinstimmen; oder
- die dreidimensionalen Bilddaten - und die Tiefendaten in ein vorbestimmtes Koordinatensystem transformiert werden, so dass die Koordinaten der ersten und der zweiten Abstände in dem - vorbestimmten Koordinatensystem übereinstimmen; und
- Anwenden der Transformationsregel auf nachfolgend erfasste Bilddaten und/oder Tiefendaten mittels der Datenverarbeitungseinrichtung.

2. Verfahren nach Anspruch 1, wobei die Transformationsregel eine Matrix für eine Koordinatentransformation angibt.

3. Verfahren nach Anspruch 1 oder 2, wobei das Kalibrieren der Bilddaten und der Tiefendaten zueinander fortlaufend in Echtzeit erfolgt.

4. Verfahren nach einem der vorangehenden Ansprüche, umfassend ein Fusionieren der mittels Anwendens der Transformationsregel transformierten Bilddaten und/oder der mittels Anwenden der Transformationsregel transformierten Tiefendaten miteinander bzw. mit den verbleibenden nicht von der Transformationsregel erfassten Bilddaten oder Tiefendaten, wobei Bildpixel und Abstände mit übereinstimmenden Koordinaten einander zugeordnet werden.

5. Verfahren nach Anspruch 4, wobei die fusionierten Daten in einem Fahrassistenzsystem des zivilen Kraftfahrzeugs verwendet werden.

6. Verfahren nach einem der vorangehenden Ansprüche, wobei das Anwenden der Transformationsregel auf nachfolgend erfasste Bilddaten umfasst, eine zweidimensionale Projektion der Transformationsregel anzuwenden, und wobei das Anwenden der Transformationsregel auf Tiefendaten umfasst, die Tiefendaten vor oder nach dem Anwenden der Transformationsregel einer zweidimensionalen Projektion zu unterziehen.

7. Verfahren nach einem der vorangehenden Ansprüche, wobei das Verfahren während einer Fahrbewegung des zivilen Kraftfahrzeugs ausgeführt wird.

8. Verfahren nach einem der vorangehenden Ansprüche, wobei das Verfahren frei von einer Verwendung eines Kalibrierungsnormals erfolgt.

9. Verfahren nach einem der vorangehenden Ansprüche, wobei die Tiefendaten mittels mindestens einer Tiefensensoreinrichtung, die an dem zivilen Kraftfahrzeug angeordnet ist, aus der folgenden Gruppe erfasst werden: Lidar-Messeinrichtung, Time-of-Flight-Messeinrichtung und Radar-Messeinrichtung.

10. Verfahren nach einem der vorangehenden Ansprüche, wobei die Bilddaten mittels mindestens einer Kameraeinrichtung, die an dem zivilen Kraftfahrzeug angeordnet ist, aus der folgenden Gruppe erfasst werden: Videobild-Kameraeinrichtung, Thermobild-Kameraeinrichtung und Infrarot-Kameraeinrichtung.

11. Verfahren nach einem der vorangehenden Ansprüche, wobei bei dem Ableiten von Abständen zwischen dem zivilen Kraftfahrzeug und in den Bilddaten dargestellten Objekten in der Umgebung des zivilen Kraftfahrzeugs aus den Bilddaten die Bildanalyse auf einer künstlichen Intelligenz in Form eines neuronalen Netzes basiert, insbesondere einem Monodepth-Netzwerk.

12. Verfahren nach einem der vorangehenden Ansprüche, umfassend ein Erfassen von weiteren Bilddaten für die Umgebung des zivilen Kraftfahrzeugs mittels einer weiteren Kameraeinrichtung, die an dem zivilen Kraftfahrzeug angeordnet ist, in einem weiteren Bildsensor-Koordinatensystem.

13. Verfahren nach einem der vorangehenden Ansprüche, umfassend ein Erfassen von weiteren Tiefendaten für die Umgebung eines zivilen Kraftfahrzeugs mittels einer weiteren Tiefensensoreinrichtung, die an dem zivilen Kraftfahrzeug angeordnet ist, wobei die weiteren Tiefendaten in einem weiteren Tiefensensor-Koordinatensystem Abstände zwischen dem zivilen Kraftfahrzeug und Objekten in der Umgebung des zivilen Kraftfahrzeugs anzeigen.

14. Ziviles Kraftfahrzeug, mit
- einer Kameraeinrichtung;
- einer Tiefensensoreinrichtung; und
- einer Datenverarbeitungseinrichtung;
wobei das zivile Kraftfahrzeug eingerichtet ist, das Verfahren nach einem der vorangehenden Ansprüche auszuführen.
